# EUROPEAN PATENT APPLICATION

(11) **EP 2 733 654 A1**
(43) Date of publication of application: **21.05.2014**
(21) Application number: 12193476.4
(22) Date of filing: 20.11.2012
(51) Int. Cl.: G06Q 20/20, G06Q 20/32, G06Q 20/34, G06Q 20/38, G06Q 20/40, G06Q 20/42, G07F 7/08, G07F 7/10

(54) **Electronic payment method, system and device for securely exchanging payment information**

(71) Applicant: Nagravision S.A., 1033 Cheseaux-sur-Lausanne (CH)
(72) Inventor: Karlov, Alexandre, 1217 Meyrin (CH); Hauert, Patrick, CH-1092 Belmont (CH)
(74) Representative: Leman Consulting S.A.

(57) **Abstract**

Electronic payment method for securely exchanging payment information between an authentication device (10) and at least one authorization server (30) via a communication device (20),
said authentication device (10) comprising a interface (11) for data exchange with the device (20), a user interface (12) for user authentication data (3) input, a nonvolatile memory (13) for storing an authentication device ID, a data memory (14) for storing a first cryptographic key (K1) and a crypto-processor (15) for performing at least cryptographic operations,
the communication device (20) comprising a device ID and at least one interface (21, 22) for receiving and sending data,
the authorization server (30) comprising a interface (31) for data exchange with said device (20), a database (32) for storing a plurality of customer accounts (A1, A2, An) each including at least one authentication device ID associated to at least one device holder authentication data, a data storage (34) for storing a second cryptographic key (K2), and a cryptographic unit (35) for performing cryptographic operations, the method comprising the steps of:
- acquiring payment information (2) at the authentication device and inputting user authentication data (3) before encrypting these data and the authentication device identifier (17) by means of the first key (K1) as a secured payment request (18),
- transmitting said secured payment request (18) to the device (20),
- transmitting a message (28) comprising a seller ID (42) and the request (18) from the device (20) to the authorization server (30),
- decrypting said secured payment request (18) with the second cryptographic key (K2) at the authorization server (30) and checking if the decrypted authentication device identifier is stored in the database (32) and if so, comparing the decrypted user authentication data (3) with the device holder authentication data associated to said authentication device identifier and if the comparison indicates a match, approving the payment request (18).

## Description

### TECHNICAL FIELD

The present invention relates to the field of electronic commerce, in particular the field of electronic payment for securely exchanging payment information between an authorization server and a user handling a communication device, especially a portable device provided with application software for performing electronic payments.

### BACKGROUND ART

With wide adoption of portable devices, such as smartphones and tablet computers, people are using the mobile technology for various needs and specifically for payments. While being multipurpose devices, these electronic devices are not primarily devoted for commercial transactions. However, they can be rendered compliant for such operations by the implementation of specific software. For instance, a smartphone can be used as portable payment means, e.g. as electronic purse, by using specific application software that can be easily installed into the portable device for allowing the user to perform specific tasks for commercial purposes.

However, users performing such electronic payments have to trust the smartphone applications, namely software (or popup) which process with the payment authorization information. Inevitably the underground economy and black market follows very closely technological trends with banking and payment frauds being one of the most successful businesses for cybermafias and cybercrime. Malware for smartphones and tablet computers is becoming widespread and it is a matter of short period of time for it to be used for banking fraud. Therefore, the user has no possibility to really know if the payment software downloaded into his portable device is genuine application software or if malicious software has attacked already installed application software for gathering sensitive information.

Therefore the problem today is how to bring additional assurance together with the required security in order to perform trusted transactions (e.g. exchanges of authorizations, identity/device authentications, digital signatures, etc...) in a convenient and user-friendly way on a payment terminal, preferably on a mobile platform such as a smartphone.

Another problem results from the diversity of debit cards and from the different technologies used for processing payments with these cards. For these reasons, it is not unusual to find merchants provided with several kinds of terminals or card readers to satisfy their clients by proposing different payment ways. However, each of these terminals or card readers involves additional costs for any merchant wanting to offer several payment ways to his customers. Besides, depending on the card reader, the debit card must be inserted in a particular manner. However, without any standardization, the customer often does not know in which direction he should turn his card in order to correctly insert it into the reader.

Therefore, there is a need for improving payment process with debit cards and for improving security of financial exchange data performed by means of point of sale terminals or other communication devices used for these purposes. Especially, it should be opportune to use portable devices (smartphones tablet computers, personal digital assistants, laptops etc...) for payment purposes without fear of personal data theft, nor for misuse of financial transactions.

### SUMMARY OF THE INVENTION

In order to solve the above-mentioned problem, the present invention aims to suggest a data transferring method, in particular an electronic payment method, for securely exchanging payment information between at least an authentication device and at least one authorization server via a communication device.

According to the present invention, the authentication device comprises:
- a communication interface for data exchange with the communication device,
- a user interface for user authentication data input,
- a nonvolatile data memory for storing an authentication device identifier,
- a data memory for storing a first cryptographic key and
- a crypto-processor for performing cryptographic operations.

The aforementioned communication device comprising at least one communication interface for receiving and sending data.

According to the present invention, the authorization server comprises:
- a communication interface for data exchange with said communication device,
- a database for storing a plurality of customer account information each including at least one authentication device identifier associated to at least one device holder authentication data,
- a data storage for storing a second cryptographic key and,
- a cryptographic unit for performing cryptographic operations.

On the basis of the above-mentioned units (i.e. authentication device, communication device and server), the method of the present invention comprises the following steps:
- acquiring payment information at the authentication device for paying a seller identifier by a seller identifier,
- inputting user authentication data,
- encrypting, within the authentication device, at least one of said payment information, authentication device identifier and user authentication data by means of the first cryptographic key so as to generate a secured payment request,
- transmitting the secured payment request to the communication device,
- transmitting, from the communication device, a message comprising a seller identifier and the secured payment request to the authorization server,
- decrypting the secured payment request with the second cryptographic key at the authorization server,
- checking if the decrypted authentication device identifier is stored in the database and if so, comparing the decrypted user authentication data with the device holder authentication data associated to the authentication device identifier and if the comparison indicates a match,
- approving the payment request.

The authentication device can be a smart card, a credit card, a pre-paid card, an electronic purse or any other dongle which can be used at least for payment purposes. According to another embodiment, the authentication device can be a dongle or a physical purse provided with electronic means, for instance with components of a smart card for performing payments according to the method of the present invention. One particularity of the authentication device is to have a secure operating system which is only dedicated to the secure payment transactions.

The communication device is not limited to portable devices (in particular to smartphones), but can also refers to a fixed terminal device (interactive terminal point, self-service pay station, personal computer NFC compliant) provided with communication means which are able to exchange data with the authentication device and with the authorization server either directly or indirectly via an intermediate device or system. The authorization server refers to a centralized management authority such as a bank or any other trusted institution that is authorized to handle debit card payments by having access to bank accounts of the device holder.

According to a preferred embodiment, the communication device and the authentication device are compliant with Near Field Communication (NFC) technology so that they can exchange between them payment information via wireless NFC communications.

It is believed by analysts that by 2015, 50% of mobile market would have Near Field Communication (NFC) technology integrated. NFC allows secure wireless (radio) communication between two devices which are in a very near proximity (typically a few centimeters) for transactions and data exchange. NFC is very interesting for mobile payments since it allows using an NFC-enabled mobile device as a credit card.

According to the present invention, the communication device is mainly used for relaying secured communications exchanged between the authentication device and the authorization server, even if the communication device such as a smartphone can be used for other tasks outside the context of the present invention. As people trust smart cards, such as bank cards, but should not trust application software installed on a communication device which processes sensitive information, the present invention suggests a solution for carrying out financial transactions by means of an authentication device and a communication device without this device having the ability to handle sensitive data. The communication device is used as an intermediate communication means, mainly for relaying the exchanged information between the secured authentication device and the trusted authorization server. In variant it can further exchange information with the seller's device. Accordingly, even if the communication device is compromised by any malware, there is no chance for performing fraudulent operation onto the exchanged data, given that none of these data can be decrypted by the communication device. Advantageously, by choosing a portable device, such as a smartphone, as being the aforementioned communication device, the present invention suggests a convenient solution in a user-friendly way for any payment made by means of a bank card or by means of similar means. Besides and according to the present invention, the communication device could replace any terminal device used at a point of sale, thus avoiding the installation of an expensive conventional terminal which is generally required for payments performed via debit cards.

Other advantages and embodiments will be presented in the following detailed description which also refers to a system for performing the above-mentioned method and to a device used in this method.

### BRIEF DESCRIPTION OF THE DRAWINGS

The present invention will be better understood thanks to the attached figures in which:
Figure 1 is a bloc diagram depicting the main devices involved in the method in accordance with the present invention,
Figure 2 shows the bloc diagram of Fig. 1 with an additional player device represented by the point of sale device in view to complete the payment cycle.

### DETAILED DESCRIPTION

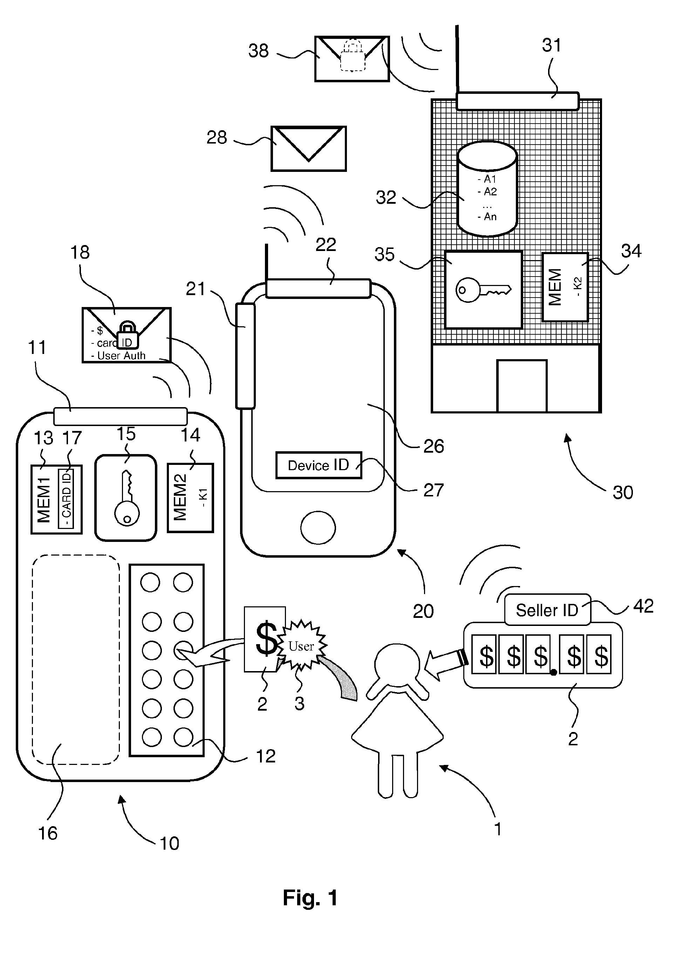

Referring to Fig. 1, the latter shows three main devices or elements which are used for securely exchanging sensitive data for payment purposes. The first element is an authentication device 10, the second one is a communication device 20, which is represented in this figure by a mobile phone as a non-limited example, and the third element is an authorization server 30 represented by a building hosting a trusted authority. The communication device 20 is not limited to a portable device, but it can also refer to a fixed terminal such as a cash register of a shop or any point of sale device. In such a case, the communication device 20 could be regarded as being included into the point of sale device or it could be regarded as playing the role of such a point of sale device.

The method of the present invention allows securely exchanging transaction information between the authentication device 10, handled by a user 1, and at least one authorization server 30. Transaction information comprises several sensitive data, in particular at least payment information 2, the authentication device identifier 17, user authentication data 3 and a seller identifier 42. In the attached drawings, the authentication device identifier 17 refers to a card identifier (card ID) given that the authentication device 10 is represented as being a smart card in accordance with a preferred embodiment. The seller identifier will be used to identify the account of the seller onto which the amount has to be credited. The seller identifier 42 may refer directly to a bank account number or to any other data allowing to determine the account number of the seller. Depending on the embodiment, payment information 2 may comprise the amount to pay by the buyer and the seller identifier.

According to the preferred embodiment of the present invention, the authentication device 10 is a smart card (and the device holder will therefore refer to the cardholder). Whatever its form, the authentication device 10, comprises several components required on the one hand for acquiring data and on the other hand for carrying out data exchanges after having securely processed with the sensitive data. To this end, the authentication device 10 comprises at least one communication interface 11 allowing data exchange with the communication device 20. Preferably, this communication interface 11 supports NFC technology while considering that the communication device 20 is therefore also NFC compliant. As NFC's type communications requires that the two devices 10, 20 (acting as sender and receiver) are placed very close from each other (typically the one over the other or distant from a few centimeters, maximum 15 cm), there is no risk that data emitted by NFC radio signal reach another device which should not be part of the communication, even if this third device is located at proximity (i.e. in the surrounding area, for instance in the hands of a person standing next to the user). Nevertheless, the communication interface 11 should be able to support another technology (such as RFID, Bluetooth, etc...).

Another component comprised in the authentication device 10 is a user interface 12 which is at least used as user feedback data input means so that the user can intentionally provides an action for launching the payment transaction. Preferably, the user interface 12 is used as user authentication input means so that the user can provide his personal identity data for authentication purposes. As illustrated in Fig. 1, the user interface 12 can be a keypad provided with several buttons, typically buttons corresponding to numbers 0-9 and at least one so-called "enter" or "OK" button and one "clear" button. Of course, other buttons such as a decimal point or alphabetic buttons providing different functions could be also used. Besides, such a keypad could be also used by the user to enter data for other purposes. According to another embodiment, the user interface 12 could be a biometric sensor such as a fingerprints sensor, a micro-camera or a voice sensor for acquiring biometric data (i.e. features) of the user (such as fingerprints, an iris picture, the shape of the user's face, hands or veins geometry, user's voice). In such a case, the device holder authentication data will refer to a coding of biometric features of the device holder, e.g. a coding of a fingerprint of the device holder or a digitalized image of a body part of the device holder.

The authentication device 10 also comprises storing means such as a data memory, preferably a nonvolatile data memory 13, for storing at least an authentication device identifier 17 (eg. a card ID) which is typically the unique number of the authentication device. The storing means of the authentication device is also used to store a first cryptographic key K1. This key K1 can be stored in the above-mentioned nonvolatile data memory 13 or in a second data memory 14 (RAM) as shown in Fig. 1.

Finally, the authentication device 10 comprises a crypto-processor 15 for performing at least cryptographic operations. Of course, this crypto-processor is also in charge of managing all the functions and the components of the authentication device 10. According to one embodiment, the crypto-processor 15 and the secure memory 13 could be located within a single chip, namely a monolithic chipset.

According to the preferred embodiment, the communication device 20 further comprises a communication device identifier 27 (device ID) which can be a unique number implemented in a nonvolatile memory during the manufacturing of the device 20 (similarly to a serial number) or an identifier assigned to the device 20. In Fig. 1, the communication device 20 refers to a portable device, in particular to a cellular phone. In this case, the communication device identifier 27 could be the phone number associated to the SIM card or another number associated to this card such as the PIN (Personal Identification Number) or the PUK (Personal Unblocking Key). The communication device 20 further comprises at least one communication interface for receiving and sending data. Preferably, the communication device 20 comprises at least a first communication interface 21 for exchanging data with the authentication device 10 and a second communication interface 22 for exchanging data with the authorization server 30. According to the preferred embodiment, the first communication interface 21 is a NFC interface which renders the device 20 NFC compliant for exchanging data with an NFC authentication device 10. The second communication interface links the communication device 20 to a common mobile communication network. However, the first and second communication interfaces could also refer to other technologies, for instance Bluetooth for exchanging data with the authentication device 10 and Wi-Fi for exchanging data with the authorization server 30.

The authorization server also comprises several components illustrated in the Fig. 1. The first component is a communication interface 31 for receiving and sending data from and towards the intermediate device 20. Data exchange with the communication device 20 could be carried out through any wire or wireless communication network, for instance via Internet network and/or any mobile network. The authorization server 30 further comprises a database 32 for storing a plurality of customer account information (A1, A2, ... An) each including at least one authentication device identifier 17 associated to at least one device holder authentication data. Therefore, each account information can be regarded as being a computer record containing personal data belonging to a particular customer. The unique authentication device identifier 17 stored in the authentication device is thus known by the authorization server 30 and the computer record allows to establish the link between the authentication device identifier 17 and the device holder. The device holder authentication data refers to any data allowing to identify the device holder. Such data can be a secret PIN code or user's biometric data that could result from a reading with a biometric reader.

The authorization server 30 also comprises data storage for storing a second cryptographic key K2. Depending on whether this second cryptographic key is a private key, a public key or a shared key, it can be stored in the secured memory 34 or within the database 32. Finally, the authorization server 30 is provided with a cryptographic unit 35 for performing cryptographic operations, namely at least decrypting messages sent from the authentication device 10 via the communication device 10. Preferably the cryptographic operations also comprise encrypting answerback messages 38 which have to be sent at least to the authentication device 10 via the communication device 20 in reply to the messages received from the authentication device. According to one embodiment, the cryptographic unit 35 is similar to the crypto-processor 15 and therefore could also include a CPU for managing the components of the authorization server if no CPU was already expected elsewhere for that purpose. Besides, the cryptographic unit 35, the CPU and the secure memory could be part of a single chip (monolithic chip).

The method of the present invention comprises several steps which will be described now. According to Fig. 1, the user 1 becomes aware of payment information 2 which is represented here by the amount of an invoice which has to be paid by the user 1. The first step of the method aims to acquire payment information at the authentication device. This can be performed by several manners. According to a first manner, the user 1 can enter the payment information directly into the authentication device 10 through the user interface 12 if it can be also used for this purpose. Preferably, this can be achieved by entering the amount to pay via the keypad of the authentication device. According to this variant, the authentication device 10 could be provided with a display 16 so that the user is able to check the value entered into the authentication device. Alternatively, this checking operation could be performed through the display 26 of the communication device 20, in particular the display of the smartphone shown in Fig. 1. To this end, the communication device could be provided with specific application software for communicating at least with the authentication device. Once the payment information has been entered by the user into the authentication device 10, the latter can sent the entered value to the communication device 20 through the communication interface 11. Upon receipt, the application software installed in the communication device 20 will ordered to display this value on the display 26.

According to another manner, the amount to be paid could be entered into the communication device 20, then it can be communicated via interfaces 21, 11 to the authentication device 10. The authentication device can display the amount on its own display 16 and the user can confirm the amount of the payment via the user interface 12, for instance by pressing an "OK" button. In case where the authentication device is not provided with a display 16, checking the amount can be performed by means of the display 26 of the communication device 26 before sending the amount to the authentication device. According to fully automatic manner, the amount to pay could be entered into the authentication device via the communication device but without the user having to manually enter the amount into the communication device. Indeed, acquiring the payment information into the communication device could be carried out automatically by receiving information from a point of sale, namely from the seller, for instance from the cash register of a shop whether a communication can be established between the apparatus of the point of sale and the communication device 20. The payment information 2 could also comprise the seller identifier 42 (e.g. the number of the seller's bank account or any identifier allowing to determine its account number) in view to credit the amount which has to be paid by the user. Such a communication could be any type of wireless communication (in particular a short range communication including NFC) compliant with one of the communication interfaces of the communication device 20.

Whatever the manner to acquire payment information into the authentication device, all of these solutions are considered safe enough. Indeed, a malicious person would have no incentive to intercept or change the amount to pay (for instance by means of a compromised application software installed in the portable device 20 or by intercepting this amount during its exchange between the authentication device and the communication device) given that this person has no means to make profit or to get rich with such a single value, namely without any personal banking account information. Besides and owing to NFC technology, the risk to intercept the exchanged data between two devices placed very close to each other is also significantly reduced.

The next step of the method is inputting user feedback data, preferably user authentication data 3. This operation aims to subsequently verify that the user of the authentication device is the device holder, thus avoiding any third party to use the authentication device to make payments on behalf of the device holder. The user can input user feedback data in order to provide a voluntary action for launching the transaction. To this end, the user interface could be provided by at least two specific areas on the authentication device, where the user has to activate one of these two areas only, in particular a specific area while the other area must remain inactivated. For instance, the user could touch or press the area in order to activate it. According to another embodiment, the user should press one of the area for a predefined time to validate the transaction. Before the transaction takes place, the authentication device verifies that the area is not pressed to avoid misinterpretation of the user's command.

Preferably, the user 1 will input user authentication data 3 by means of the user interface 12. Typically, if the user interface 12 is a keypad, the user has to enter his secret PIN code. The authentication device does not require any display for such an operation given that the PIN code needs to be kept secret. However, the display 26 of the communication device 20 could merely invite the user for entering his PIN code by displaying an appropriate message (e.g. "Please, enter your PIN code"). Thus, general instructions intended to the user can be exchanged between the authentication device 10 and the communication device 20 then, they can be displayed through the display 26 of the device 20 without compromising the financial transaction. Typically, displaying these instructions to the user can be handled by the application software installed in the communication device 20. In the case where the user interface 12 refers to a biometric sensor, the authentication data will be input into the authentication device by the user 1 via a biometric reader. In any case, it should be noted that the user interface 12 is an interface that can be handled directly by the user 1, namely without the intermediary of any reader. Accordingly, the user interface 12 should not be confused with the magnetic strip or the contact chip of a common credit card where each of these means requires an additional apparatus (card reader) for reading/writing data from or into the card.

Then, the authentication device encrypts at least one of said payment information 2, authentication device identifier 17 (e.g. a card ID in case the authentication device refers to a smart card) and user authentication data 3 with the first cryptographic key K1. These data can be separately encrypted by the key K1 or they can be grouped together into a single message to encrypt with this key. Preferably, these data are encrypted together in a single message defined as a so-called secured payment request 18. Advantageously, this requires performing only one encryption operation instead of three, thus saving computer resources while increasing the speed of the transaction. The encryption operation can be carried out in accordance to any suitable and common encryption algorithm. Given that the authentication device identifier 17 is already stored in the secure memory 13 of the authentication device and as the authentication data has been directly entered into the authentication device (i.e. without transiting through another device, nor requiring prior data exchange), therefore sensitive data of the transaction never leave the authentication device 10 without having been encrypted by its crypto-processor 15. Advantageously, payment information is also encrypted as personal data of the user, even if payment information could remain in plain text in the payment request. To increase the confidentiality of the personal data of the user, the authentication device identifier has been also encrypted although the only information that is truly sensible is the user authentication data 3. After the encryption step, the data (i.e. payment information, authentication device identifier and user authentication data) are preferably output in a single message, namely in the secured payment request 18. Alternately, the data contained in the secured payment request could be part of a plurality of encrypted messages (or encrypted data packets) each comprising a specific header identifying the authentication device ID.

The secured payment request 18 is then transmitted to the communication device 20 via the respective communication interfaces 11, 21, preferably by means of NFC technology.

Once received by the communication device 20, the encrypted payment request 18 is merely forwarded to the authorization server within a message 28 comprising the seller identifier 42. The seller identifier can be found by the communication mobile device 20 by means of the application software previously installed in the communication device 20. Thus, the seller identifier can be stored within the application software. Alternatively, instead of recovering the seller identifier from the application software, the seller identifier could be sent by the point of sale device (i.e. by the seller) and received by the communication device 20 via a communication established between the communication device and the point of sale device.

Instead of appending the seller identifier to the secured payment request 18 within the message 28, the seller identifier could be included into the secured payment request. To this end, the communication device could send it to the authentication device 10 before the latter finalizes and encrypts the payment request 18.

In case where the communication device 20 receives, via one of its interfaces (e.g. a Bluetooth interface), the seller identifier from the point of sale device, then, depending on the embodiment, the seller identifier could be appended to the secured payment request 18 (in the message 28) or it could be sent within a message to the authentication device 10, via one of its interfaces, so that the seller identifier 42 can be acquired by the authentication device 10 and included into the secured payment request 18.

According to another embodiment the message 28 further comprises the communication device identifier 27 (device ID). Thus, the recipient, namely the authorization server 30, will be fully able to identify the communication device 20 through which the authentication device 10 can be finally reached, for instance for sending an acknowledgment. This can be useful, for instance for sending a reply from the authorization server to the authentication device, or at least to the communication device to keep the user informed about the payment process. Alternatively, the reply can comprise data for updating the authentication device 10 (e.g. for updating the history of successful payments, or to update the account balance associated with the authentication device). Within a security point of view, the communication device 20 has no means for decrypting the secured payment request and therefore this device 20 is only able to forward this request to the recipient. The network address of the authorization server can be appended to the secured payment request by the authentication device. In variant, the application software of the communication device 20 could also determine the appropriate network address on the basis of an indication (instruction) transmitted by the authentication device to the communication device, for instance before transmitting the secured payment request. According to another embodiment, if the communication device 20 is a portable device belonging to the user (e.g. his smartphone), the portable device can store the network address of the authorization server within the parameters of the device 20 or within the parameters of the application software. Advantageously, the portable device of the user will fully able to retrieve the network address of the authorization server whenever necessary, thus avoiding the transfer of this information from the authentication device towards the portable device at each payment request. The network address of the authorization server could take different forms, depending on the nature of the communications linking the communication device and the authorization server. For instance, if the message 28 is sent via the mobile network (e.g. by means of an SMS), therefore the network address of the authorization server could be a phone number. If the message 28 is sent via another network such as Internet, the network address will refer to a logical address (e.g. the MAC address or IP address of the recipient). Other kinds of network address could be used in accordance with the nature of the network.

Upon receipt by the authorization server 30, the secured payment request is decrypted by the cryptographic unit 35 which requires the second cryptographic key K2 stored in the memory 34. By using the same algorithm as that used by the crypto-processor 15 of the authentication device and by considering that the cryptographic keys K1, K2 are either identical (shared key) or refer to paired keys (private/public keys) the authorization server is able to access to the content of the secured payment request 18.

After this decryption operation, the authorization server checks if the decrypted authentication device identifier 17 (e.g. a card ID) included in the request is stored in its database 32 and if so, it compares the decrypted user authentication data 3 with the device holder authentication data associated to the authentication device identifier. To this end, the server reads the content of the computer record associated to the authentication device ID, in particular the device holder authentication data stored in the relevant customer account information Ax. If the comparison indicates a match, the payment request can be approved because the server has verified that the user corresponds to the device holder. In this case, the amount to pay can be credited onto the seller account which can be identified by means of the seller identifier 42.

According to one embodiment, the first cryptographic key K1 is identical to the second cryptographic key K2 and thus refers to a secret shared key. There are several manners for sharing a key between the authentication device 10 and the authorization server 30. For instance, the first cryptographic key K1 can be determined by the authorization server itself during the authentication device issuance (i.e. before manufacturing of the authentication device or before writing the authentication device identifier into the ROM memory 13 of the authentication device). Another manner for generating a shared key refers to Diffie-Hellman method. This known method allows two parties to jointly establish a shared secret key over an insecure communication channel and then to use this key to encrypt subsequent communications according to a symmetric cryptographic scheme.

The secret shared key is not necessarily a static key but it can evolve according to a secret algorithm shared by the crypto-processor 15 of the authentication device and by the authorization server. Thus, the encryption/decryption algorithm may depend on at least one additional parameter that changes over time, for instance every month or every day. To this end, the value changing of the parameter can be based on an internal clock which could be updated by receiving answerback messages 38 from the authorization server or by synchronization with another clock, e.g. the clock of the communication device 20. The secret algorithm can be implemented into the crypto-processor at the same time as the first cryptographic key K1.

In variant, the secret shared key K1, K2 could be defined as being the user authentication data, typically the secret PIN code of the user. In this case, there is no need to store the first cryptographic key K1 in the memory 14 due to the fact that the authentication data is input by the user each time a payment must be performed. If the user authentication data is incorrect with respect to the device holder authentication data, the authorization server will be unable to decrypt correctly the secured payment request and it will refuse to complete the payment.

Instead of using a shared key, the first cryptographic key K1 and the second cryptographic key K2 may form a pair of keys belonging to the authorization server and corresponding respectively to a public key and a private key of the authorization server. According to this asymmetric scheme, the first cryptographic key K1 can be stored in an unsecured memory of the authentication device given that it refers to a public key.

According to a preferred embodiment, at least one of the communications linking the authentication device to the authorization server through the communication device is a wireless communication. Preferably, the communication established between the authentication device 10 and the communication device 20 is a Near-Field-Communication and the communication established between the communication device 20 and the authorization server 30 is an Internet Wi-Fi type communication or a wireless phone type communication.

According the preferred embodiment, the authentication device comprises its own display 16 and the user interface 12 is a keypad comprising 0-9 numerals buttons, one "cancel" button, one "OK" button and one "decimal-point" button. Besides, some buttons may also have a dual function, similarly to certain key on a keyboard. Thus, the keypad can be used not only to enter the secret PIN code of the user (user authentication data 3), but also for entering the value of the financial transaction (payment information) and for services purposes such as checking the balance of the account associated with the authentication device, the available credit total limit, total expenses, payment history, reward points etc...

The first step referring to acquiring payment information into the authentication device could be preceded by an activation step, in particular by the activation of user identification input means (e.g. a keypad or a biometric sensor). Then the authentication device waits for the user to provide the required user authentication data 3 through the aforementioned input means 12.

As described above, the method of the present invention does not suggest a full payment cycle, because the user does not receive any acknowledgment of the financial transaction. Accordingly, the following steps of the method of the present invention aims to suggest some embodiments to complete the payment process by receiving an answerback message 38 from the authorization server in reply to the payment request.

Instead of directly approving or refusing the payment request further to the comparison between the decrypted user authentication data 3 and the device holder authentication data, the authorization server could prepare an answerback message 38 intended to the authentication device. The content of this answerback message depends on the result of the decrypting, checking and comparison operations performed by the authorization server. Indeed, if the cryptographic unit 35 is unable to decrypt the secured payment request or if the decrypted authentication device identifier 17 is not stored in the database 32, then the answerback message 38 may content information such as "Transaction error" or "Unknown identifier". If the comparison about the authentication data does not indicate a match, the answerback message will comprise information such as "Unauthorized transaction", while in the opposite case it may comprise information such as "Payment OK".

Then, the authentication device has to acquire the answerback message 38, preferably in a secured manner. To this end the authorization server sends the message through the communication device 20, since it knows that the user is still waiting for receiving an acknowledgment by holding the communication between the authentication device and the communication device. To this end, the authorization server uses the communication device identifier 27 (i.e. owing to its phone number or to its logical address) for sending the message to the appropriate recipient. Preferably, the answerback message is a secured message for ensuring the integrity and/or the confidentiality of its content. This can be achieved in a well known manner by means of a symmetric or asymmetric encryption scheme and/or by using a signature and a digital certificate.

Once the answerback message 38 has been received by the communication device 20, the latter forwards it to the authentication device by the same channel as that used for receiving the secured payment request from the authentication device. Advantageously, the communication device 20 does not act as a common payment terminal since it does not handle the content of the messages but it is only used as a relay device for forwarding the messages it receives. Accordingly, the application software installed to this end has no means to decrypt the secured messages transiting through the communication device. Thus, even if the application software is compromised, the sensitive data contained in the encrypted messages cannot be read by such software. Moreover, any attempt to intercept a secured message through the communication network does not allow to get the sensitive data comprised in this message given that the cryptographic keys and algorithms are not implemented within the communication device (e.g. in the application software) but are kept on support (authentication device, monolithic chipset) reputed as being inviolable.

Once the authentication device has been reached by the answerback message 38, this authentication device decrypts the message (if it has been previously encrypted by the authorization server) within the crypto-processor 15 by using the first key K1 (shared key) stored in the memory 14. Then, the authentication device restitutes the content of this message (in full or in part) in clear form to the user. Restituting information contained in the answerback message to the user can be achieved by displaying said information, either on the display 26 of the communication device 20 or on the display 16 of the authentication device if it is provided with a display means. In variant and instead of displaying a message, information can be transmitted to the user by another means, for instance by an acoustic sound or by vibrating the communication device, especially if it refers to a smartphone. This could be particularly useful e.g. for partially sighted persons.

According to a basic embodiment, the information referring to the success or failure of the payment could by sent in plain text (i.e. without encryption) since such a message has only a poor interest for any malicious person wanting to intercept it. In addition to such information, the answerback message 38 could also comprise other information such as the new account balance, the available credit total limit, the total expenses, the payment history or the acquired reward points. Preferably, such additional information is secured by a cryptographic process compliant with the algorithm implemented in the crypto-processor 15 of the authentication device.

According to another embodiment, the answerback message 38 can be sent in an encrypted form by using private/public pairs of keys. To this end, the customer account information stored in the database 32 of the authorization server 30 further includes a public key which, with a private key is stored in the crypto-processor 15 (or in the secured memory 13) of the authentication device 10, form together a pair of keys belonging to the authentication device. Thus, the step aiming to securely obtain the answerback message by the authentication device is performed by:
- extracting the public key from the relevant customer account (Ax),
- encrypting the answerback message 38 within the authorization server 30 and by means of the public key of the authentication device 10,
- transmitting the encrypted answerback message 38, firstly from the authorization server 30 to the communication device 20 by means of the communication device identifier 27, and secondly from the communication device 20 to the authentication device 10,
- decrypting the encrypted answerback message 38 within the crypto-processor 15 of the authentication device 10 by means of the private key stored in this authentication device.

According to another embodiment, a digital certificate could be used for securely transmitting the content of the answerback message from the authorization server to the authentication device. Thus the step aiming to securely obtain the answerback message by the authentication device can be performed by:
- generating, within the cryptographic unit 35 of the authorization server 30, a signature by calculating a first hash value of the answerback message 38 then encrypting the first hash value by means of the private key belonging to the authorization server,
- transmitting, to the authentication device 10, the answerback message 38, the signature and a digital certificate provided by a certification authority for authenticating a public key belonging the authorization server 30,
- obtaining a public key pertaining to the certification authority for authenticating the digital certificate and thus authenticating the public key of the authorization server within the authentication device, and if the public key of the authorization server is authentic, then
- decrypting the signature within the crypto-processor 15 of the authentication device by means of the authenticated public key of the authorization server,
- calculating a second hash value of the answerback message within the crypto-processor 15,
- comparing the first and second hash values and if these two hash values are not identical, then amending the answerback message so that this answerback message contains an information indicating an error.

Thus, when the authentication device restitutes the content of this message in accordance with the last step of the method, the user can know if the payment failed or not.

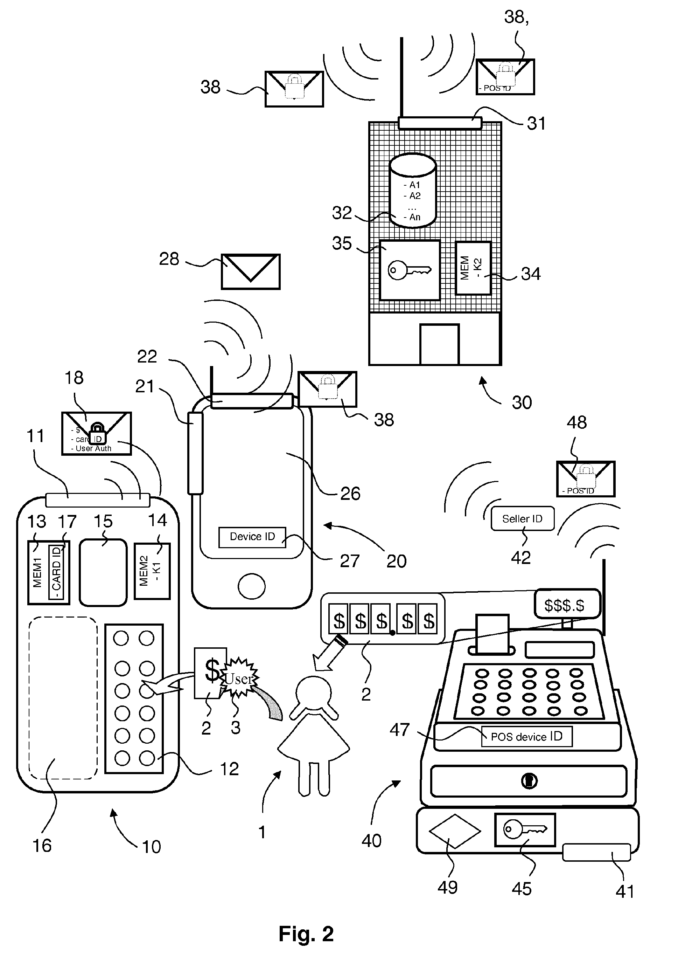

As shown Fig. 2, the present method can be further completed by including the last player of the payment transaction which is the point of sale (POS), namely the seller or the creditor to which the seller identifier 42 refers. According to any modern payment system, the creditor is provided with a point of sale device 40 which e.g. refers to a cash register, a pay station or a payment terminal providing the payment information (i.e. the amount that the user has to pay). Accordingly, the present invention will refer to an electronic payment method for securely exchanging payment information between a point of sale device 40, an authentication device 10 and an authorization server 30 through communications relayed by a communication device 20.

Such a point of sale device 40 comprises a POS device identifier 47 and/or an electronic address (logical address such as IP or MAC address) known by the authorization server 30, a data exchange interface 41, a checking module 49 able to read information from the answerback message 38, 38' and to compare at least a part of said information with a reference data. Preferably, it further comprises a cryptographic module 45 for performing cryptographic operations, in particular for decrypting the answerback messages in case the authorization server sent them in an encrypted form.

The step aiming to acquire payment information (i.e. the amount to pay and preferably also the seller identifier 42) in the authentication device could be performed in a fully automatic manner, namely without the user having to enter the amount, as already explained before.

Data transmitted from the communication device 20 to the authorization server 30 will also comprise the POS device identifier 47 and/or the logical address relating to the point of sale in addition to the seller identifier (if the latter is not already included into the payment request 18). Thus, the authorization server will also able to send messages directly to the point of sale device 40 in reply to the payment request 18. In variant, the POS device identifier 47, the seller identifier 42 and/or the logical address relating to the point of sale could be directly sent, through a message 48, to the authorization server 30 by the point of sale device 40 itself, if the latter known how to communicate with this server (e.g. through an IP network and by means of a logical address). In case where the seller has only one point of sale device, the POS device identifier 47 and the seller identifier 42 could be represented by single information 42. For the sake of simplification, the messages exchanges between the devices shown in Fig. 2 are shown as wireless messages. However, wired communications may also be used, particularly between the authorization device 30 and the POS device 40.

The answerback message 38 can be prepared by the authorization server not only for the authentication device but also for the point of sale device. Therefore, according to one embodiment, the answerback message 38 can be sent to the point of sale device 40, or both to the communication device 20 and to the point of sale device, for routing purposes by means of the respective identification means belonging to these devices (e.g. phone number or logical address used as communication device identifier 27 / POS device identifier 47). In variant, the authorization server could send a specific reply 38' to the point of sale. The content of such a reply may comprise information about the outcome of the payment process performed by the authorization server (e.g. "payment OK" or "payment failed") and the payment information (i.e. the value or the amount debited on the customer account) of the transaction. Additionally, other information may be included in the reply 38', for instance time/date information, the authentication device identifier, the customer account number etc... Preferably, at least personal information referring to the customer will be received in an encrypted form for confidentiality purposes. According to one embodiment, all information contained in the reply intended to the point of sale will be encrypted either by means of a private/public pairs of keys or by means of a shared key. A signature and a digital certificate can also be used to guarantee the integrity of the reply. According to another embodiment, the answerback message 38 could be forwarded to the point of sale device 40 upon its receipt by the communication device 20. This can be done if at least the integrity of this answerback message can be guaranteed to ensure that the application software installed in the communication device does not have any possibility to insidiously modify the content of the answerback message. Preferably, the answerback message 38 transiting through the communication device will be encrypted, no matter if it is intended to the authentication device only or if it is also intended to the point of sale device.

In any case, the point of sale device 40 seeks to get an acknowledgment from the authorization server 30, confirming that the correct amount has be debited from the customer account and will be credited to the seller account. To this end, the point of sale device 40 can be also provided with the checking module 49 for comparing the payment information provided to the user with the payment information contained in the answerback message 38, 38'. If the amount that has been credited to the seller account is at least equal to the amount (payment information 2) that the customer has to paid, the point of sale device can display on its screen a message confirming the success of the payment. Otherwise, the goods will not be release to the customer until the payment has not been completed correctly.

The present invention also refers to an electronic payment system for securely exchanging payment information between the authentication device 10 and at least one authorization server 30 via a communication device 20.

The authentication device 10 of this system comprises:
- a communication interface 11 for data exchange with the communication device 20,
- a nonvolatile data memory 13 for storing an authentication device identifier 17,
- a data memory 14 for storing a first cryptographic key K1 and
- a crypto-processor 15 for performing cryptographic operations.

The communication device 20 of this system comprises at least one communication interface 21, 22 for receiving and sending data 18, 28, 38, 42.

The authorization server 30 of this system comprises:
- a communication interface 31 for data exchange with the communication device 20,
- a database 32 for storing a plurality of customer account information A1, A2, A3, ...An, each including at least one authentication device identifier 17 associated to at least one device holder authentication data,
- a data storage 34 for storing a second cryptographic key K2 and,
- a cryptographic unit 35 for performing cryptographic operations.

According to the present invention, the authentication device 10 of this system comprises a user interface 12 for user authentication data 2 input and the said communication device 20 is a wireless communication device, preferably a portable device, in particular a smartphone. In variant other portable devices such as tablet computers or laptops could be also used. Preferably, the communication device 20 comprises a communication device identifier 27 for receiving acknowledgments from the authorization server 30.

Preferably, the authentication device comprises a display 16 for displaying user input data and/or data information received or provided by the authentication device.

According to another embodiment, the system of the present invention further includes the point of sale device 40.This point of sale device 40 comprises a POS device identifier 47 and/or an electronic address, at least one data exchange interface 41 for communicating at least with the communication device 20 and the authorization server 30, a checking module 49 able to read information from the answerback message 38, 38' and to compare at least a part of said information with a reference data. Preferably, it further comprises a cryptographic module 45 for performing cryptographic operations, in particular for decrypting the answerback messages 38, 38' in case the authorization server 30 sent them in an encrypted form. Communications between the point of sale device 40 and the communication device 20 can be used for providing the seller identifier 42 to the communication device 20.

The subject-matter of the present invention also refers to a device, in particular to the authentication device 10 used in the aforementioned method. Accordingly, the authentication device 10 comprises:
- a short range communication interface 11 for data exchange,
- a user interface 12 for user authentication data 3 input,
- a nonvolatile data memory 13 for storing an authentication device identifier 17,
- a data memory 14 for storing a first cryptographic key K1 and
- a crypto-processor 15 for performing cryptographic operations, said crypto-processor 15 comprising :
- means to receive a payment information though the short range communication interface 11,
- means to receive a user input to validate this payment information,
- means to encrypt at least one of said payment information 2, authentication device identifier 17 and user authentication data 3 by means of the first cryptographic key K1 so as to generate a secured payment request 18,
- means to send the secured payment request 18 to the short range communication interface 11.

## Claims

1. Electronic payment method for securely exchanging payment information between an authentication device (10) and at least one authorization server (30) via a communication device (20),
said authentication device (10) comprising:
- a communication interface (11) for data exchange with said communication device (20),
- a user interface (12) for user authentication data (3) input,
- a nonvolatile data memory (13) for storing an authentication device identifier (17),
- a data memory (14) for storing a first cryptographic key (K1) and
- a crypto-processor (15) for performing cryptographic operations,
said communication device (20) comprising at least one communication interface (21, 22) for receiving and sending data (18, 28, 38),
said authorization server (30) comprising:
- a communication interface (31) for data exchange with said communication device (20),
- a database (32) for storing a plurality of customer account information (A1, A2, An) each including at least one authentication device identifier (17) associated to at least one device holder authentication data,
- a data storage (34) for storing a second cryptographic key (K2) and,
- a cryptographic unit (35) for performing cryptographic operations,
the method comprising the steps of:
- acquiring payment information (2) at the authentication device (10) for paying a seller identified by a seller identifier (42),
- inputting user authentication data (3),
- encrypting at least one of said payment information (2), authentication device identifier (17) and user authentication data (3) by means of the first cryptographic key (K1) so as to generate a secured payment request (18),
- transmitting said secured payment request (18) to the communication device (20),
- transmitting, from the communication device (20), a message (28) comprising the seller identifier (42) and said secured payment request (18) to the authorization server (30),
- decrypting said secured payment request (18) with the second cryptographic key (K2) at the authorization server (30),
- checking if the decrypted authentication device identifier (17) is stored in the database (32) and if so, comparing the decrypted user authentication data (3) with the device holder authentication data associated to said authentication device identifier (17) and if the comparison indicates a match,
- approving the payment request (18).

2. Method of claim 1, wherein the first cryptographic key (K1) is identical to the second cryptographic key (K2) and refers to a secret shared key.

3. Method of claim 2, wherein said secret shared key is evolving according to a secret algorithm shared by the crypto-processor (15) of the authentication device (10) and by the authorization server (30).

4. Method of claim 1, wherein the first cryptographic key (K1) and the second cryptographic key (K2) form a pair of keys belonging to the authorization server (30) and corresponding respectively to a public key and a private key of said authorization server (30).

5. Method of any preceding claims, wherein said seller identifier (42) is acquired by the authentication device (10) in order to be included into the secured payment request (18).

6. Method of claim 5, wherein said seller identifier (42) is acquired by the authentication device (10) by receiving it within a message from the communication device (20).

7. Method of any of preceding claims, wherein said authentication device (10) further comprises a keypad (12) for acquiring said payment information (2).

8. Method of any of preceding claims, wherein said authentication device (10) further comprises a keypad for inputting the user authentication data (2).

9. Method of any of preceding claims, wherein said authentication device (10) further comprises a display (16) for displaying entered data and/or information.

10. Method of any of claims 1 to 7, wherein said authentication device (10) further comprises a biometric sensor for sensing biometric features used as user authentication data (3) and said device holder authentication data refers to a coding of biometric features.

11. Electronic payment system for securely exchanging payment information between an authentication device (10) and at least one authorization server (30) via a communication device (20),
said authentication device (10) comprising:
- a communication interface (11) for data exchange with said communication device (20),
- a nonvolatile data memory (13) for storing an authentication device identifier (17),
- a data memory (14) for storing a first cryptographic key (K1) and
- a crypto-processor (15) for performing cryptographic operations,
said communication device (20) comprising at least one communication interface (21, 22) for receiving and sending data (18, 28, 38, 42),
said authorization server (30) comprising:
- a communication interface (31) for data exchange with said communication device (20),
- a database (32) for storing a plurality of customer account information (A1, A2, An) each including at least one authentication device identifier (17) associated to at least one device holder authentication data,
- a data storage (34) for storing a second cryptographic key (K2) and,
- a cryptographic unit (35) for performing cryptographic operations, **characterized in that** said authentication device (10) comprises a user interface (12) for user authentication data (3) input and **in that** said communication device (20) is a portable device.

12. System of claim 11, wherein said authentication device (10) comprises a display (16).

13. System of claim 11 or 12, wherein said authentication device (10) is a smart card.

14. System of any of claim 11 to 13, wherein said portable device is a wireless communication device.

15. Authentication device (10) comprising:
- a short range communication interface (11) for data exchange,
- a user interface (12) for user authentication data (3) input,
- a nonvolatile data memory (13) for storing an authentication device identifier (17),
- a data memory (14) for storing a first cryptographic key (K1) and
- a crypto-processor (15) for performing cryptographic operations, said crypto-processor (15) comprising :
- means to receive a payment information though the short range communication interface (11),
- means to receive a user input to validate this payment information,
- means to encrypt at least one of said payment information (2), authentication device identifier (17) and user authentication data (3) by means of the first cryptographic key (K1) so as to generate a secured payment request (18),
- means to send the secured payment request (18) to the short range communication interface (11).
